# EUROPEAN PATENT APPLICATION

(11) **EP 2 916 573 A1**
(43) Date of publication of application: **09.09.2015**
(21) Application number: 14305301.5
(22) Date of filing: 03.03.2014
(51) Int. Cl.: H04W 12/06, H04W 8/00, H04L 29/12

(54) **Method for accessing a first device and a corresponding server**

(71) Applicant: Gemalto SA, 92190 Meudon (FR)
(72) Inventor: Duprez, Jerôme, 13705 La Ciotat (FR)

(57) **Abstract**

The invention relates to a method 30 for accessing a first device.

According to the invention, the first device is identified by at least two identifiers relating to the first device. Only one device identifier of one and the same type is active at a given time. The method comprises the following steps. A second device 116 sends to a remote server 110 a request 38 for sending to the first device a message by using a first device identifier. The remote server determines, based upon the first device identifier, a second device identifier, the first device identifier and the second device identifier allowing both to address the first device. And the remote server sends to the first device the message 310 by using the second device identifier, the second device identifier being active at the time of sending the second device identifier.

The invention also relates to a corresponding server.

## Description

### Field of the invention:

The invention relates generally to a method for accessing a first device.

The first device may be a terminal, a user terminal or a Secure Element (or SE) coupled to a host device.

Within the present description, an SE or termed token is a smart object that, on the one hand, protects physically access to data that the smart object stores and, on the other hand, is intended to communicate with the outside world.

The present invention is notably applicable to a mobile radio-communication field in which the terminal, like a mobile (tele)phone, cooperates with a chip.

The chip may be either an embedded chip, such as an embedded Universal Integrated Circuit Card (or eUICC), or a chip included within a smart card termed Subscriber Identity Module (or SIM) type card or the like, as an SE.

Moreover, the invention also pertains to a server for accessing a first device.

### State of the art:

As known per se, a mobile phone cooperates with an eUICC, as a first device, so as to identify a subscriber within a mobile (radio-communication) network. The eUICC stores several subscriptions relating to several associated mobile network operators. Only one subscription and one associated device identifier, like a Mobile Subscriber Integrated Services Digital network Number (or MSISDN) and/or a Uniform Resource Identifier (or URI), are active at a given time.

However, when a switch at the first device side from a first to a second subscription occurs, another mobile phone, as a second device, may not be aware of such a subscription switch. The second device does not know which associated device identifier is active at the first device side. The second device that desires to access the first device is therefore not able to access the first device.

There is a need to provide a solution that allows accessing a first device without knowing which associated device identifier is active at the time a second device desires to access the first device.

### Summary of the invention:

The invention proposes a solution for satisfying the just herein above specified need by providing a method for accessing a first device.

According to the invention, the first device is identified by at least two identifiers relating to the first device. Only one device identifier of one and the same type is active at a given time. The method comprises the following steps. A second device sends to a remote server a request for sending to the first device a message by using a first device identifier. The remote server determines, based upon the first device identifier, a second device identifier. The first device identifier and the second device identifier allow both to address the first device. And the remote server sends to the first device the message by using the second device identifier. The second device identifier is active at the time of sending the second device identifier.

The principle of the invention consists in that a second device transmits to a remote server a message by using an identifier, as a first device identifier, relating to a first device that is desired to be accessed. The remote server retrieves another identifier, as a second device identifier, relating to the first device that is active at that time. Then, the remote server re-transmits to the first device the message by using the second device identifier.

The first and the second device identifier are both related to the first device and allow identifying and accessing the first device.

The remote server relays the original message without any modification of its payload.

It is to be noted that the message may be of any type, like a Short Message Service (or SMS) type message or an Internet type message.

This is the remote server that knows which device identifier is active at a time at the first device side that allows addressing the first device with the valid device identifier.

The invention solution allows communicating with the first device without knowing which associated device identifier is active at the time another device, like the second device or another device connected to the second device, desires to reach the first device.

Thus, irrespective of whether one or several subscription switches occur at a first device side, the remote server may change or not an identifier relating to the first device to which a received message is intended, prior to its forwarding. In other words, the remote server either keeps from received data, besides a message content to be forwarded, an identifier relating to a first device, as a message destination device, or replaces a received identifier relating to a first device by a substitution identifier relating to the first device that is recorded at the remote server side.

It is to be noted that the second device that attempts to address the first device may be any kind of communicating device, like a remote server, a terminal or a user terminal.

According to a further aspect, the invention is a server for accessing a first device.

According to the invention, the server is configured:
- to receive a request for sending to the first device a message by using a first device identifier;
- to determine, based upon the first device identifier, a second device identifier, the first device identifier and the second device identifier allowing both to address the first device; and
- to send the message by using the second device identifier, the second device identifier being active at the time of sending the second device identifier.

### Brief description of the drawings:

Additional features and advantages of the invention will be more clearly understandable after reading a detailed description of one preferred embodiment of the invention, given as an indicative and non-limitative example, in conjunction with the following drawings:

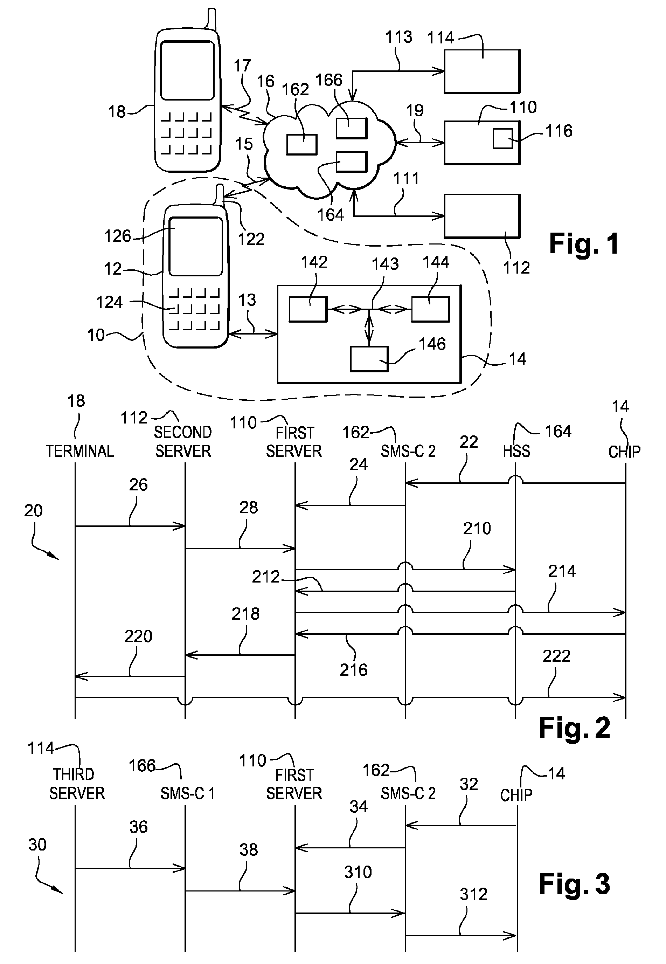

- Figure 1 illustrates a simplified diagram including a first remote server that is connected to a second remote server, as a second device, and a mobile equipment including an eUICC, as a first device, the first remote server being arranged to receive a message with a mobile equipment identifier, to determine a valid mobile equipment identifier and to send to the first device the original message by using the valid mobile equipment identifier, according to the invention;
- Figure 2 represents a first example of a message flow between the first remote server, the first device, the second device and a user terminal, as a third device, of figure 1, so that the third device initiates, through the second device and the first remote server, a session of an IP communication with the first device, thanks to a re-routing, at the first remote server, of an initiation message; and
- Figure 3 is a second example of a message flow between the first remote server, the first device, the second device and a third remote server, as a third device, of figure 1, so that the third device transmits, through the second device and the first remote server, an SMS-type message to the first device, thanks to a re-routing, at the first remote server, of the SMS-type message.

### Detailed description:

Herein under is considered a case in which the first device is an SE that is coupled to a terminal and that is identified by different terminal identifiers that may be used for being accessed at different times.

According to another embodiment (not represented), the first device is a terminal, as a standalone entity. In other words, the first device does not cooperate with any SE.

Naturally, the herein below described embodiment is only for exemplifying purposes and is not considered to reduce the scope of the invention.

**Figure 1** shows schematically a mobile equipment 10, one or several mobile radio-communication networks 16, a second user terminal 18, a first remote server 110, a second remote server 112 and a third remote server 114.

The mobile equipment 10 includes a mobile phone 12, as a user terminal, and an embedded Universal Integrated Circuit Card (or eUICC) 14, as a chip and a first device.

Instead of being embedded, the chip may be included within a smart card or another medium, as a Secure Element (or SE).

The invention does not impose any constraint as to a kind of the SE type. As removable SE, it may be a SIM type card, a Secure Removable Module (or SRM), a smart dongle of the USB (acronym for "Universal Serial Bus") type, a (micro-) Secure Digital (or SD) type card, a Multi-Media type Card (or MMC) or a medium of any other format that is to be coupled to a host device, as first device.

For the sake of simplicity, the mobile phone 12, the eUICC 14, the mobile radio-communication network(s) 16, the second user terminal 18, the first remote server 110, the second remote server 112 and the third remote server 114 are termed herein after the phone 12, the chip 14, the network 16, the terminal 18, the first server 110, the second server 112 and the third server 114 respectively.

Only one phone 12 and one terminal 18 that are connected, through the network 16, to the first server 110 are represented for a clarity reason. However, the first server 110 is able to be accessed from and to access, Over-The-Air (or OTA), Over-The-Internet (or OTI), or Over The Cloud (or OTC), a fleet of connected terminals.

Instead of a phone 12, it may be any other device including means for processing data, comprising or being connected to wireless communication means for exchanging data with outside, and comprising or being connected to means for storing data.

Within the present description, the adjective "wireless" denotes notably that the communication means communicates via one or several Long Range (or LR) RadioFrequency (or RF) links.

The LR RF may be fixed at several hundreds of MHz, e.g. around 850, 900, 1800, 1900 and/or 2100 MHz.

The phone 12 is used for accessing the network 16.

The network 16 may be constituted by a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network") and/or a Long Term Evolution (or LTE) type network(s).

Such a network set is not exhaustive but only for exemplifying purposes.

The network 16 is connected to the first server 110.

The network 16 comprises or is connected to an Internet type network (not represented).

As to the phone 12, it may be any device including means for processing data, comprising or being connected to an antenna 122 for sending to and/or receiving data from outside, comprising or being connected to means for interfacing with a user, as Man Machine Interface (or MMI), like a keyboard 124, a loudspeaker (not represented) and/or a display screen 126, and comprising or being connected to means for storing data.

Instead of the phone 12, the chip 14 host device may be, for instance, a Machine-to-Machine (or M2M) controller, a set-up box, a desktop computer, a laptop computer, a media-player, a game console, a tablet, a netbook, a handset and/or a Personal Digital Assistance (or PDA) that incorporates or cooperates with a baseband radio processor.

A phone microprocessor, as data processing means, processes data originating from an internal component or an external entity.

A phone memory(ies), as data storing means, may comprise one or several volatile memories and one and/or several non-volatile memories.

The phone memory stores data, like user data.

The phone memory stores an Operating System (or OS) and one or several applications to be executed by the phone microprocessor.

As applications, there is at least one communication application for communicating with an external user device, like an SMS type message communication application, an email type message communication application and/or the like.

The phone MMI allows a phone user to interact with the phone 12, the chip 14 or a remote server.

The antenna 122 allows communicating data, through an LR RF link 15, with one or several networks 16.

The phone 12 plays, in a preferential manner, a role of a modulator-demodulator (or modem) notably for the chip 14.

The phone 12 is able to exchange data, in a distant manner, with any entity connected to the network 16, like the first server 110.

The phone 12 is preferably coupled or connected to the chip 14.

The phone I/O interfaces include one or several I/O interfaces for exchanging data with the chip 14.

The chip 14 is under control of the phone microprocessor.

Alternately, instead of being coupled to the chip 14, the phone memory(ies) stores data stored within the chip 14 as described infra.

According to a particular embodiment, the chip 14 is soldered to a Printed Circuit Board (or PCB) of the phone 12.

According to another embodiment, the phone I/O interface with the chip 14 is an International Organization for Standardization (or ISO) 7816 interface, as contact interface, when the chip 14 is inserted, in a removable manner, within the phone 12.

Alternately, instead of a contact interface, the phone I/O interface with the chip 14 is connected to or includes a Contact-Less (or CL) interface. The phone 12 is connected to or includes means for communicating data while using preferably a Short Range (or SR) RF link. The SR RF link may be related to any technology that allows the phone 12 to exchange data, through a CL link, with the chip 14. The SR RF may be related to a Near Field Communication (or NFC) type communication technology.

The chip 14 belongs to a user, as subscriber to a wireless service(s).

The chip 14 is connected, through a bi-directional link 13, to the phone 12.

The chip 14 includes a microprocessor(s) 142, as data processing means, a memory(ies) 144, as data storing means, and one or several I/O interfaces 146 that are internally all connected, through an internal bidirectional data bus 143, to each other.

The I/O interface(s) 146 allow communicating data from the internal chip components to the chip exterior and conversely.

The microprocessor 142 processes, controls and communicates internally data with all the other components incorporated within the chip and, through the I/O interface(s) 146, with the chip exterior.

The microprocessor 142 executes or runs one or several applications.

As applications, there are one or several applications for communicating with one or several external devices, like the first server 110.

The microprocessor 142 is preferably able to initiate actions, in order to interact directly with the outside world, in an independent manner of the phone 12, as a chip host device. Such a capacity of interaction at the initiative of the chip 14 is also known as proactive capacity. According to one preferred embodiment, the chip 14 is able to use a SIM ToolKit (or STK) type command, as proactive command to be sent to the phone 12.

The chip 14 is thus able to send, at its (own) initiative, through the phone 12, to any device connected to the phone 12 data by using a proactive command for sending a message to the concerned device to be addressed. The device may be included within or connected to the network 16. The message may be an SMS, an email or a HyperText Transfer Protocol (or HTTP) type message or the like, that includes a request for notifying an identifier relating to the chip 14, like a MSISDN, as mobile equipment identifier, or a URI.

As known per se, the MSISDN, as a chip 14 identifier, is used for identifying a mobile radio-communication network subscriber and routing a call or data to the concerned subscriber.

As known per se, a URI, as a name of a web resource and a chip 14 identifier, is used for identifying a subscriber chip 14.

Only one MSISDN and/or one URI, as a chip 14 identifier, is active at a given time.

Only one single chip 14 identifier of one and the same type, namely the one of the mobile equipment or the one of the name of a web resource, is active at a given time.

The chip 14 identifier that is active at that time is preferably added, within a message originating from the chip 14, prior to reaching the addressed device, by a network entity, such as a Visitor Location Register (or VLR) (not represented), a Home Subscriber Server (or HSS) 164 or the like.

As known per se, the HSS 164 (or VLR), as network entity, manages a database that includes information relating to a subscription to the IMS network. The HSS 164 is able to provide routing information, like Internet Protocol (or IP) information, allowing to reach the chip 14, as a destination device.

The chip 14 identifier may change in time. Different chip 14 identifiers may thus be associated with the chip 14 at different times. The chip 14 identifiers allow addressing the chip 14 from outside.

The chip 14 is able to switch from a first subscription to a second subscription.

Such a subscription switch may occur further to an interaction of the user through the phone 12 MMI, an automatic request originating from the phone 12, e.g. for an emergency call, an automatic request originating from an external entity, like a remote server that manages the active subscription at the chip 14 side, or an automatic request originating from the chip 14 based on local operating conditions, e.g. when moving from a country to another country.

The microprocessor 142 executes, in a preferred manner, one or several security functions.

The security functions include preferably a user authentication process to be used prior to continuing an execution of an application that may be executed by the phone 12 or the chip 14. To authenticate the user, the user has to provide a Personal Identity Number (or PIN) or biometric data, as user reference data, that is securely stored within the (chip) memory 144.

The memory 144 stores an OS.

The memory 144 stores preferably one or several Subscriber Identity Module (or SIM) type applications.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the phone 12 to identify and authenticate to one or several networks 16.

The memory 144 stores one or several applications that the microprocessor 142 executes.

The memory 144 stores preferably data relating to a URI, a Uniform Resource Locator (or URL) and/or an Internet Protocol (or IP) address of an external entity to be addressed, like the first server 110, as an interlocutor device.

The memory 144 stores preferably an identifier relating to the chip 14, like an Integrated Circuit Card IDentifier (or ICCID).

The memory 144 stores data relating to several subscriptions to several networks.

The data relating to several subscriptions includes two or more corresponding sets of data relating to a subscription to a network, being each termed infra set of subscription data.

Each set of subscription data includes:
- an International Mobile Subscriber Identity (or IMSI), as subscriber and service subscription identifier for accessing a (mobile radio-communication) network 16;
- a key Ki, as network authentication key, allowing to authenticate the concerned subscriber to the concerned network 16; and
- Milenage or any other authentication algorithm allowing to authenticate the concerned subscriber to the concerned network 16.

The IMSI is used for identifying a subscriber to a mobile radio-communication network operator or the like.

For the sake of simplicity, the memory 144 stores, for instance, only two sets of subscription data, one set of data relating to a first subscription and another set of data relating to a second subscription. Naturally, the invention is also applicable when the memory 144 stores more than two sets of subscription data.

Two subscriptions to different networks (not represented) relating to different network operators (and/or on their behalf) are available, at the client side, within one and the same chip 14.

Each network, prior to a subscription switch and after the subscription switch, includes a Short Message Service Center (or SMS-C) or the like, as network entity.

As known per se, the SMS-C is able to receive SMS messages, to store the received SMS messages, to forward the received SMS messages to its or their specified addressees.

The network, as first network (not represented), that is used by the chip 14 prior to the subscription switch includes an SMS-C 1 166.

The network, as second network (not represented), that is used by the chip 14 after the subscription switch includes an SMS-C 2 162.

Each set of subscription data is associated with an identifier relating to the chip 14.

The first subscription is valid prior to a subscription switch while the second subscription is valid after the subscription switch.

The first subscription is associated with an MSISDN1 (and/or URI1), as a first chip 14 identifier, while the second subscription is associated with an MSISDN2 (and/or URI2), as a second chip 14 identifier.

The second chip 14 identifier is preferably distinct from the first chip 14 identifier.

After the subscription switch, the second subscription is active and the second chip 14 identifier, as corresponding chip 14 identifier, is active and therefore valid.

The chip 14 is arranged to let communicate to the first server 110, at either an occurrence of an event, like a chip boot or a subscription switch, or a request from an external device, like the first server 110, an identifier relating to the chip 14 that is active at that time.

The first server 110 is connected, through a first bi-directional link 19, to the network 16.

Likewise, the second server 112 and the third server 114 are, through a second bi-directional link 111 and a third bi-directional link 113, to the network 16 respectively.

The second server 112 includes e.g. a Session Initiation Protocol (or SIP) proxy server.

As known per se, the SIP proxy server 112 is an intermediary entity that acts as both a server and a client on behalf of other clients. The SIP proxy server 112 plays the role of routing while interpreting and, when necessary, re-writing specific part(s) of an incoming request message prior to its forwarding.

The third server 114 includes e.g. an application server.

Each server is identified by a URI, like an URL, an IP address or the like, as an identifier relating to the server.

The first server 110 identifier may be stored within either the chip memory 144 or a phone 12 memory.

The first server 110 may play a role of a Subscription Manager (or SM) that manages a fleet of tokens including the chip 14, as to a subscription which a managed token has to be switched to. As such, the first server 110 is able to send to a managed token(s) a command for switching to an identified subscription. Moreover, the first server 110 is also able to receive from a managed token when a subscription switch occurs effectively at the token side a message for informing the first server 110 about a valid identifier relating to the token.

The first server 110 may be operated by a mobile radio-communication network operator, as an MNO or a Mobile Virtual Network Operator (or MVNO), a service provider or on its behalf.

The first server 110 is hosted by a computer.

The first server 110 includes a microprocessor(s) (not represented), as data processing means, comprises and/or is connected to a memory(ies), as data storing means, and one or several I/O interfaces (not represented).

The first server 110 is dedicated to running an application for managing a database and communicating data of the database to outside.

The database includes a token set in which each token is identified and associated with one (or several) updated identifier(s) relating to the concerned token that is(are) active and allows accessing the token from outside at a given time. Each (identified) token is accessible at any moment thanks to the lastly updated token identifier that is valid for addressing the token.

To update the database with the lastly updated token identifier, the first server 110 captures the MSISDN (or URI), as mobile equipment identifier and token identifier, by receiving preferably from the concerned token a message including the identifier associated with the token.

Once the first server 110 has captured the lastly updated token identifier, the first server 110 writes within the database the lastly updated token identifier in association with the token included within the token set. The first server 110 stores in a memory 116, as information repository, within the database the lastly updated token identifier in association with the token included within the token set.

The first server 110 thus tracks each managed token.

The first server 110 is arranged to receive a request for sending to a token a message by using a first identifier relating to the token, as a first token identifier.

The message that is received along with the request comprises the first token identifier that allows addressing the token, as an addressee of the message.

The message that is received along with the request comprises an identifier relating to a sender of the message. The sender identifier allows addressing the sender of the message.

The sender of the message may be either the entity that addresses the message to the first server 110 or another entity, as a third device, from which the message originates and that has directly or indirectly addressed the entity that sent the request for sending to a token along with the message.

The first server 110 stores the message and the first token identifier.

The first server 110 stores the sender identifier.

The message to be sent may be received from any external communicating device, like the terminal 18 or the second server 112. The external communicating device may only know one identifier relating to the token, as first token identifier. The external communicating device may be therefore unaware that the token may have changed, in the meantime, from a first token identifier to a second identifier relating to the token further to one or several subscription switches. The first token identifier and the second token identifier allow both addressing the concerned token at different times.

According to the invention, the first server 110 is configured to determine, based on the first token identifier, a second identifier relating to the token, as valid token identifier, by reading within the database the lastly updated token identifier associated with the token identifier. The second identifier relating to the token, as second token identifier, is active at the time the first server 110 sends the message accompanying the received request and the second token identifier.

Then, the first server 110 is further adapted to either address or let address the concerned token by using, besides the original message content to be forwarded, the second token identifier.

The first server 110 is therefore arranged to relay a received message to a managed token, as a recipient or addressee identified within the received message, while keeping the message content and changing the identifier relating to the token to be thus addressed.

**Figure 2** depicts an exemplary embodiment of a message flow 20 that involves the the chip 14, the user terminal 18, the SM server, as first server 110, the SIP proxy server, as second server 112, the SMS-C 2 162 and the HSS 164.

In the described example, it is assumed that the chip 14 has switched from a first to a second subscription. The second subscription is the single active subscription at the chip 14 side. The chip 14 is attached to the second network including the SMS-C 2 162 relating to the second MNO.

The chip 14 sends, through the concerned VLR (not represented), to the SMS-C 2 162 an SMS type message 22 including, besides an identifier relating to the chip 14, as sender of the SMS type message, and an identifier relating to the SMS-C 2 162, as recipient of the SMS type message, information relating to the second subscription, as current subscription. The identifier relating to the chip 14 may be its IMSI or its ICCID.

The SMS type message 22 is preferably an SMS-Mobile Originated (or MO) message with Transport Protocol (or TP)-User Data (or UD) that is used for transporting the useful payload in an SMS type format.

The VLR adds, as routing information, within the SMS type message, the MSISDN 2, as the current mobile equipment identifier and token identifier associated with the chip 14 that allows reaching the chip 14.

The SMS-C 2 162 sends to the first server 110 an SMS type message 24 including, besides the information relating to the second subscription, the MSISDN 2, as valid token identifier.

The first server 110 stores the MSISDN 2, as the lastly updated token identifier, in association with the chip 14 as identified within the received SMS type message 22.

The first server 110 knows that the chip 14 that is associated with the MSISDN 1 and the URI 1, as first token identifier, for the first subscription, is currently associated with the MSISDN 2 and the URI 2, as the lastly updated token identifier, for the active second subscription.

In the present described implementation, it is assumed that the terminal 18, as a third device, is a Voice over IP (or VoIP) device that needs to establish a session of an IP communication with the chip 14, as first device.

To do this, the terminal 18 sends to the second server 112 a message "INVITE (To URI1, From URIcaller)", as a request 26 for establishing a communication session with the chip 14, as identified destination device, from the terminal 18, as identified sender device from which the request originates.

The second server 112 knows that the URI 1, as first token identifier, relates to a token that is managed by the first server 110 for a first subscription.

The second server 112 sends to the first server 110 the received request 28 for establishing a session of an IP communication with the chip 14 that is initiated by the terminal 18, as identified initiator of the received request.

The first server 110 stores the received request 28 for establishing a session of an IP communication with the chip 14 and the identifier relating to the terminal 18, as identified initiator, in association with the initial token identifier URI 1, as first token identifier.

The first server 110 is thus able to retrieve the request along with its initiator and its destination device with the associated first token identifier.

The first server 110 knows the associated MSISDN 2, as the currently valid token identifier and second token identifier, for the chip 14, as the concerned token. The first server 110 needs to know its associated URI, as another second identifier relating to the token that allows addressing the token.

For this purpose, the first server 110 sends to the HSS 164, as a mobile network entity, a request 210 for getting a currently valid token identifier along with the MSISDN 2, as second identifier relating to the chip 14.

Alternately, instead of accompanying the request 210, the request 210 includes the second token identifier.

Based on the MSISDN 2, as second token identifier, the HSS 164 retrieves within the managed database a corresponding URI, namely URI 2, as a second token identifier, that allows addressing currently the chip 14.

Then, the HSS 164 sends to the first server 110, as request response 212, the second token identifier URI 2, as currently valid token identifier.

The first server 110 stores the second token identifier URI 2 in association with the second token identifier MSISDN 2.

Then, the first server 110 retrieves a message that the first server 110 has previously received and that is associated with the second token identifier MSISDN 2.

The first server 110 fetches the request for establishing a session of an IP communication with the chip 14.

Based on the second token identifier MSISDN 2, the first server 110 determines the associated second token identifier URI 2.

The first server 110 sends to the chip 14 a message 214 "INVITE (To: URI2, From URIcaller)" including the request for establishing a session of an IP communication with the chip 14 from the terminal 18, as identified sender device, by using the second token identifier URI 2.

To this end, the first server 110 includes within the message 214 the second token identifier URI 2. To do this, the first server 110 either inserts within the request for establishing a session of an IP communication with the chip 14 from the terminal 18 the second token identifier URI 2 or appends to the request for establishing a session of an IP communication with the chip 14 from the terminal 18 the second token identifier URI 2.

Once the chip 14 receives the request for establishing a session of an IP communication with the chip 14, the chip 14 generates an IP communication session identifier "tag" to be used for addressing the chip 14.

Then, the chip 14 creates a request response "HTTP response 2XX (To: URI 2+tag, Contact; URI 2-IP)" for establishing a session of an IP communication with the chip 14 and the identifier relating to the terminal 18, by including the second token identifier URI 2, the communication session identifier "tag" and a corresponding token identifier URI 2-IP, as valid token identifier. The corresponding token identifier URI 2-IP may be e.g. XXX.YYY.ZZZ. where X, Y and Z represent each a decimal notation. The corresponding token identifier URI 2-IP allows addressing currently the chip 14.

The chip 14 sends to the first server 110 a created request response 216 "HTTP response 2XX (To: URI 2+tag, Contact: URI 2-IP)" that includes the second token identifier URI 2, the IP communication session identifier "tag" and a corresponding token identifier URI 2-IP, as valid token identifier. The request response 216 includes an approval for establishing a session of an IP communication with the terminal 18. The approval for establishing a session of an IP communication with the terminal 18 includes or is accompanied with a corresponding token identifier URI 2-IP, as an IP address relating to the chip 14.

Based on the open socket relating to the IP at the chip 14 side, the first server 110 retrieves the associated received request for establishing a session of an IP communication with the chip 14 and the associated initial token identifier URI1.

Then, based on the open socket relating to the IP at the second server 112 side, the first server 110 sends to the second server 112 the request response 218 "HTTP response 2XX (To: URI 1+tag, Contact: URI 2-IP)" that includes the associated initial token identifier URI 1, the IP communication session identifier "tag" and a corresponding token identifier URI 2-IP, as valid token identifier.

Based on the open socket relating to the IP at the terminal 18 side, the second server 112 sends to the terminal 18 the request response 220 "HTTP response 2XX (To: URI 1+tag, Contact: URI 2-IP)" that includes the associated initial token identifier URI 1, the IP communication session identifier "tag" and a corresponding token identifier URI 2-IP, as valid token identifier.

Once the terminal 18 receives the request response 220 "HTTP response 2XX (To: URI 1+tag, Contact: URI 2-IP)", the terminal 18 interprets the request response content and extracts from the request response the corresponding valid token identifier.

Thus, the terminal 18 knows the valid token identifier, as the lastly updated token identifier, so as to address correctly the chip 14.

Then, the terminal 18 sends to the chip 14 a request 222 "ACK (To:URI 2-IP+tag, From: URIcaller)" for acknowledging receipt of the request response including the valid token identifier URI 2-IP, the IP communication session identifier "tag" and a terminal identifier allowing the chip 14 to address the terminal 18, as original request initiator.

Subsequently, the terminal 18 uses the valid token identifier URI 2-IP and the IP communication session identifier "tag", so as to communicate with the chip 14 during a media session (not represented). The media session may be related to a voice or data communication.

**Figure 3** shows an exemplary embodiment of a message flow 30 that involves the the chip 14, the SM server, as first server 110, an application server, as third server 114, the SMS-C 1 166 and the SMS-C 2 162.

In the described example, it is assumed that the chip 14 has switched from a first to a second subscription. The second subscription is the single active subscription at the chip 14 side. The chip 14 is attached to the second network including the SMS-C 2 162 relating to the second MNO. The chip 14 was firstly attached to the first network including the SMS-C 1 166 relating to the first MNO. The first MNO may be a first connectivity provider, i.e. allows accessing the first network only to download data relating to the second subscription.

The chip 14 sends, through the concerned VLR (not represented), to the SMS-C 2 162 an SMS type message 32 including, besides an identifier relating to the chip 14, as sender of the SMS type message, and an identifier relating to the SMS-C 2 162, as recipient of the SMS type message, information relating to the second subscription, as current subscription.

The SMS type message 32 is preferably an SMS-MO message with TP-UD that is used for transporting the useful payload in an SMS type format.

The VLR adds, as routing information, within the SMS type message, the MSISDN 2, as the current mobile equipment identifier and token identifier associated with the chip 14 that allows reaching the chip 14.

The SMS-C 2 162 sends to the first server 110 an SMS type message 34 including, besides the information relating to the second subscription, the MSISDN 2, as valid token identifier. The information relating to the second subscription includes an identifier relating to the chip 14.

The first server 110 stores the MSISDN 2, as the lastly updated token identifier, in association with the chip 14 as identified within the received SMS type message 32.

The first server 110 knows that the chip 14 that is associated with the MSISDN 1, as first token identifier, for the first subscription, is currently associated with the MSISDN 2, as the lastly updated token identifier, for the second subscription.

In the present described implementation, it is assumed that the third server 114 is, e.g. an application server, that needs to send an SMS type message to the chip 14, as first device.

To do this, the third server 114 sends to the SMS-C 1 166 a message 36 including a request for sending an SMS type message to the chip 14, as identified destination device, from the third server 114, as identified sender device from which the message originates. The SMS type message includes an SMS type Mobile Terminated (or MT) with TP-UD, as the useful payload to be transferred. The TP-UD includes applicative data to be processed by an application(s) stored by the chip 14. The applicative data may include one or several scripts, one or several commands and/or data intended to one or several applications supported by the chip 14.

The SMS-C 1 166 knows that the MSISDN 1, as first token identifier, relates to a token that is managed by the first server 110.

The SMS-C 1 166 sends to the first server 110, the received message, a message 38 including a request for sending an SMS type message to the chip 14, as identified destination device, from the third server 114, as identified sender device from which the message originates.

The first server 110 stores the received message 38 including a request for sending an SMS type message to the chip 14, as identified destination device, from the third server 114, as identified sender, in association with the initial token identifier MSISDN 1, as first token identifier.

The first server 110 is thus able to retrieve the request along with its sender and its destination device associated with the associated first token identifier MSISDN 1.

The first server 110 knows that the first token identifier MSISDN 1 is associated with the MSISDN 2, as the currently valid token identifier and second token identifier.

Based on the first token identifier MSISDN 1, the first server 110 determines the associated second token identifier MSISDN 2.

The first server 110 sends to the SMS-C 2 162 a message 310 including a request for sending an SMS type message to the chip 14, as identified destination device, from the third server 114, as identified sender, by using the second token identifier MSISDN 2.

The SMS-C 2 162 sends to the chip 14 an SMS type message 312 by using the second token identifier MSISDN 2.

The chip 14 may send, through the SMS-C 2 162, the first server 110 and the SMS-C 1 166, to the third server 114 an SMS type message (not represented), e.g. an SMS-MO (PoR with ADR), including an acknowledgement of receipt of the SMS type message along with data relating to a result relating to an application execution. To carry out such an SMS type message sending to the third server 114, the chip 14 uses the second token identifier MSISDN 2.

Based on the second token identifier MSISDN 2, the first server 110 retrieves the associated first token identifier MSISDN 1.

The first server 110 sends to the SMS-C 1 166 a message (not represented) including a request for sending an SMS type message to the third server 114, as identified destination device, from the chip 14, as identified sender, by using the first token identifier MSISDN 1.

Finally, the SMS-C 1 166 sends to the third server 114 an SMS type message (not represented) by using the first token identifier MSISDN 1.

The invention is therefore convenient for the terminal 18 or the third server 114, as third device, that addresses the first server 110 that gets the valid token identifier, so as to communicate or let communicate with the token, as a destination device, by using its current and valid token identifier.

The third device may not know that the destination device to be addressed has a plurality of subscriptions. The third device may not know which subscription is currently active at the destination device side and even less a corresponding MSISDN and/or URI to be used for connecting to the destination device.

There is no message to be sent to the third device prior to sending a message to the destination device.

As a matter of fact, the first server 110 that knows a current active subscription and an active identifier allowing to address the destination device enables a re-routing of a message to the intended device.

The embodiment that has just been described is not intended to limit the scope of the concerned invention. Other embodiments may be given. As another embodiment example, instead of exchanging with a remote server, the first device exchanges, over a CL link, with a local server.

## Claims

1. A method (20 or 30) for accessing a first device (14),
**characterized in that,** the first device being identified by at least two identifiers relating to the first device, only one device identifier of one and the same type being active at a given time, the method comprises the following steps:
- a second device (112 or 166) sends to a remote server (110) a request (28 or 38) for sending to the first device a message by using a first device identifier;
- the remote server determines, based upon the first device identifier, a second device identifier, the first device identifier and the second device identifier allowing both to address the first device; and
- the remote server sends to the first device the message (214 or 310) by using the second device identifier, the second device identifier being active at the time of sending the second device identifier.

2. Method according to claim 1, wherein, to determine the second device identifier, a mobile network entity (164) sends to the remote server the second device identifier.

3. Method according to claim 2, wherein, prior to receiving the second device identifier, the remote server sends to the mobile network entity a request (210) for getting a second device identifier, the request including or being accompanied with the first device identifier.

4. Method according to any previous claim, wherein the message includes an identifier relating to a third device (18 or 114) from which the message originates.

5. Method according to any previous claim, wherein the message includes a request for establishing a session of an Internet Protocol communication with the first device from a third device.

6. Method according to any previous claim, wherein, prior to sending to the first device the message by using the second device identifier, the remote server stores the message and the first device identifier.

7. Method according to any previous claim, wherein the second device identifier includes at least one element of a group comprising:
- a Mobile Subscriber Integrated Services Digital network Number; and
- a Uniform Resource Identifier.

8. Method according to any previous claim, wherein the remote server sends, through a mobile network entity (162), to the first device the message by using the second device identifier.

9. Method according to any previous claim, wherein the first device sends to the remote server either a response message and or, as request response, an approval for establishing a session of an IP communication with the third device, the approval including or being accompanied with an IP address relating to the first device.

10. A server (110) for accessing a first device (14),
**characterized in that** the server is configured:
- to receive a request (28 or 38) for sending to the first device a message by using a first device identifier;
- to determine, based upon the first device identifier, a second device identifier, the first device identifier and the second device identifier allowing both to address the first device; and
- to send the message (214 or 310) by using the second device identifier, the second device identifier being active at the time of sending the second device identifier.
